Europäisches Patentamt

European Patent Office

Office européen des brevets

(11) Veröffentlichungsnummer: **0 426 982 A2**

## (12) EUROPÄISCHE PATENTANMELDUNG

(21) Anmeldenummer: 90117890.5

(22) Anmeldetag: 18.09.90

(51) Int. Cl.⁵: **G01N 21/61**

(30) Priorität: 30.09.89 DE 3932838

(43) Veröffentlichungstag der Anmeldung:
**15.05.91 Patentblatt 91/20**

(84) Benannte Vertragsstaaten:
**CH DE FR GB IT LI NL**

(71) Anmelder: **Hartmann & Braun
Aktiengesellschaft**

Gräfstrasse 97
**W-6000 Frankfurt am Main 90(DE)**

(72) Erfinder: **Fabinski, Walter**
**An der Landwehr 70**
**W-6239 Kriftel(DE)**
Erfinder: **Bernhardt, Günter**
**Heerstrasse 194**
**W-6000 Frankfurt(DE)**

(54) **Abgleichverfahren für einen nichtdispersiven Infrarot-Gasanalysator.**

(57) Die Erfindung beschreibt ein Abgleichverfahren für einen nichtdispersiven Infrarot-Gasanalysator zur Bestimmung der Konzentration einer Gaskomponente mit hoher Grundkonzentration und geringer Konzentrationsänderung.

Dem Meßgas wird ein Vergleichsgas abgezweigt, welches der Grundkonzentration entspricht. Dieses Gas wird durch die Vergleichsseite des Strahlenganges eines Gasanalysators geleitet (strömendes Vergleichsgas). Der Gasanalysator mißt nun die Meßkomponente als Differenz des Meßgases und der Grundkonzentration. Die verbleibende Abhängigkeit der Empfindlichkeit der Meßgröße von deren Grundkonzentration wird mit folgenden Verfahrensschritten eliminiert:

- im ersten Schritt wird das Meßgas mit der aktuellen Grundkonzentration in die Meß- und die Vergleichsküvette des Gasanalysators geleitet und der Nullpunkt des Gasanalysators abgeglichen;

- im zweiten Schritt wird eine Kalibrierküvette in den Strahlengang der beiden Küvetten geschoben, die mit der Meßkomponente einer vorgegebenen Konzentration gefüllt ist, die dem gewünschten Meßbereich von beispielsweise 50 ppm entspricht und die Empfindlichkeit so abgeglichen, daß dieser Meßbereich der Meßspanne entspricht.

## ABGLEICHVERFAHREN FÜR EINEN NICHTDISPERSIVEN INFRAROT-GASANALYSATOR

Die Erfindung betrifft Abgleichverfahren für einen nichtdispersiven Infrarot-Gasanalysator zur Bestimmung der Konzentration einer Gaskomponente mit hoher Grundkonzentration und geringer Konzentrationsänderungen nach dem Oberbegriff des Anspruches 1.

In der Gasmeßtechnik stellt sich häufig die Aufgabe, die Meßkomponente als kleine Größe auf einer relativ großen Grundkonzentration zu messen. Dieses Meßproblem ist dann kompliziert, wenn sich die Grundkonzentration der Meßkomponente laufend ändert. Ein solches Beispiel gibt die Messung der Assimilation. Aufgrund der hier verwendeten optischen Meßverfahren, die nach dem Lambert-Beer'schen Gesetz arbeiten, welches den nichtlinearen Zusammenhang zwischen der Absorbtion der Lichtstrahlung und der Konzentration eines Gases beschreibt, ändert sich die Empfindlichkeit der Meßeinrichtung in Abhängigkeit von dieser Grundkonzentration des zu messenden Gases.

In dem angeführten Beispiel zur Assimilationsmessung ist die interessierende Größe der $CO_2$-Gehalt der Luft. Dieser kann je nach Versuchsbedingungen in der Konzentration zwischen ca. 320 und 1000 ppm schwanken. Da nur geringe Veränderungen des $CO_2$-Wertes auftreten, sind Meßbereiche von typisch z.B. 50 ppm mit unterdrücktem Meßbereichsanfang gewünscht. Durch die schwankende Grundkonzentration können dabei leicht Fehler bis zu 50 % auftreten.

Der Erfindung liegt die Aufgabe zugrunde, einen nichtdispersiven Infrarot-Gasanalysator zur Messung von Gaskonzentrationen über eine Grundkonzentration mit einem variablen Konzentrationsoffset anzugeben, bei dem die Meßempfindlichkeit für die Meßkomponente unabhängig von deren Grundkonzentration ist.

Die gestellte Aufgabe wird mit den im Kennzeichen des Anspruches 1 angegebenen Merkmalen gelöst.

Dem Meßgas wird ein Vergleichsgas abgezweigt, welches der Grundkonzentration entspricht. Dieses Gas wird durch die Vergleichsseite des Strahlenganges eines Gasanalysators geleitet (strömendes Vergleichsgas). Der Gasanalysator mißt nun die Meßkomponente als Differenz des Meßgases und der Grundkonzentration. Die verbleibende Abhängigkeit der Empfindlichkeit der Meßgröße von deren Grundkonzentration wird mit folgenden Verfahrensschritten eliminiert:

- im ersten Schritt wird das Meßgas mit der aktuellen Grundkonzentration in die Meß- und die Vergleichsküvette des Gasanalysators geleitet und der Nullpunkt des Gasanalysators abgeglichen;
- im zweiten Schritt wird eine Kalibrierküvette in den Strahlengang der beiden Küvetten geschoben, die mit der Meßkomponente einer vorgegebenen Konzentration gefüllt ist, die dem gewünschten Meßbereich von beispielsweise 50 ppm entspricht und die Empfindlichkeit so abgeglichen, daß dieser Meßbereich der Meßspanne entspricht.

Danach ist das Gerät für den eingestellten Meßbereich korrekt auf die Empfindlichkeit abgeglichen. Bei sich ändernder Grundkonzentration des Meßgases sind die beiden Verfahrensschritte zu wiederholen. Läuft der Abgleich automatisch ab, ergibt sich für den Betreiber eine quasikontinuierliche Korrektur der Empfindlichkeit.

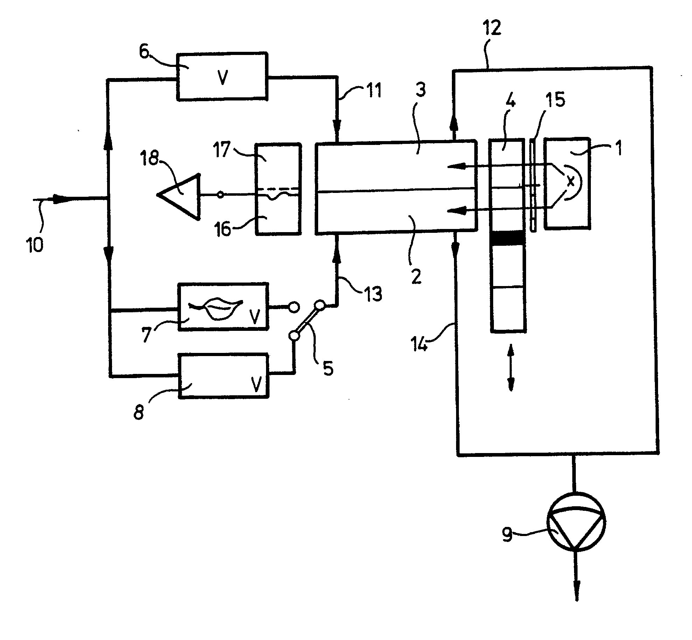

Nachfolgend wird die Erfindung anhand der Zeichnung näher beschrieben. Die Figur zeigt eine Meßanordnung für die Assimilationsmessung eines grünen Blattes mit einem Infrarot-Gasanalysator.

Der Infrarot-Gasanalysator mit Meß- und Vergleichsstrahlengang ist wie üblich aufgebaut aus IR-Strahlern 1, einer die Strahlung modulierenden umlaufenden Blende 15, einer vom Meßgas durchströmten Meßküvette 2 und einer entsprechenden vom Vergleichsgas durchströmten Vergleichsküvette 3 sowie den beiden Empfängerkammern 16 und 17. Die den absorbierten Energien in den Kammern entsprechenden elektrischen Signale werden in bekannter Weise in einem hier nicht weiter dargestellten Detektor 18 verarbeitet.

Als Vergleichsgas wird Luft verwendet, die mit Hilfe einer Pumpe 9 aus einer Leitung 10 über ein Vergleichsgefäß 6 mit dem Volumen V in die Vergleichsküvette 3 strömt. Ein Teil der über die Leitung 10 angesaugten Luft durchströmt ein Meßgefäß 7 mit dem Volumen V und gelangt in die Meßküvette 2 des Infrarot-Gasanalysators. Mit Hilfe der Leitungen 12 und 14 und der Pumpe 9 werden Vergleichs- und Meßgas aus den Küvetten 2 und 3 gesaugt. In dem Meßgefäß 7 findet die zu untersuchende Assimilation statt; die dabei entstehenden Gase durchmischen sich mit der durchströmenden Luft und werden anschließend mit Hilfe des Infrarot-Gasanalysators gemessen. Neben dem Meßgefäß 7 befindet sich ein gleichgroßes Gefäß 8 mit dem Volumen V, das gleichfalls mit Luft über die Leitung 10 versorgt wird. Es liefert das beim Abgleichverfahren benötigte Vergleichsgas für die Meßküvette 2.

Wie bereits eingangs erläutert, schwankt der $CO_2$-Gehalt der Luft in der Größenordnung von 320 bis 1000 ppm, während der bei der Assimilation interessierende $CO_2$-Wert sich im Bereich von 50 ppm bewegt. Die durch die schwankende Grundkonzentration bedingten Meßfehler werden wie folgt eliminiert.

Zunächst wird die Luft mit der aktuellen Grund-

konzentration an $CO_2$ aus dem Gefäß 8 über ein Magnetventil 5 in die Meßküvette 2 geleitet. Meß- und Vergleichsküvette 2 und 3 enthalten Luft der gleichen Grundkonzentration an $CO_2$. Der elektrische Nullpunkt des Detektors 18 im Infrarot-Gasanalysator wird auf diesen aktuellen $CO_2$-Wert abgeglichen. Nach dem Nullpunktabgleich wird eine Kalibrierküvette 4 in den Strahlengang der beiden Küvetten 2 und 3 geschoben, die mit der Meßkomponente oder einem vergleichbaren Gas gefüllt ist. Die Konzentration der Füllgase entspricht hier einem für die Assimilationsmessung geeigneten Meßbereich, beispielsweise einer Konzentration von 50 ppm $CO_2$. Mit Hilfe der Kalibrierküvette 4 wird die elektrische Empfindlichkeit des Detektors 18, also seine Verstärkung, so eingestellt, daß gerade die Konzentration von 50 ppm seiner vollen Meßspanne entspricht.

Nach Abschluß dieser beiden Abgleichvorgänge wird die Kalibrierküvette 4 aus den Strahlengängen entfernt und das Magnetventil 5 verbindet das Meßgefäß 7 wieder über die Leitung 13 mit der Meßküvette 2. Danach ist der Infrarot-Gasanalysator für den eingestellten Meßbereich korrekt auf die Empfindlichkeit abgeglichen. Bei sich ändernder Grundkonzentration des $CO_2$-Gehaltes in der Luft ist der beschriebene Abgleichvorgang zu wiederholen. Da er automatisch ablaufen kann, ergibt sich für den Betreiber eine quasikontinuierliche Korrektur der Empfindlichkeit des Infrarot-Gasanalysators.

**Ansprüche**

1. Abgleichverfahren für einen nichtdispersiven Infrarot-Gasanalysator zur Bestimmung der Konzentration einer Gaskomponente mit hoher Grundkonzentration und geringer Konzentrationsänderung mit

a) einer Ultrarot-Strahlungsquelle

b) einer mit einem Meß- und einer mit einem Vergleichsgas beschickten Küvette, die von getrennten Strahlenbündeln durchsetzt sind,

c) einer die Strahlenbündel periodisch unterbrechenden Blendenvorrichtung,

d) jeweils einer mit der zu messenden Gaskomponente oder einem entsprechend absorbierenden Gas gefüllten Empfangskammer, die vom jeweiligen Strahlenbündel nach Durchdringung der Küvette beaufschlagt sind,

e) einem mit den Empfangskammern pneumatisch verbundenen Druckaufnehmer, der ein elektrisches Signal an einen Detektor liefert, das eine Funktion der durch Strahlungsabsorption in den Empfangskammern entstehenden Druckdifferenz ist, dadurch gekennzeichnet, daß

f) in einem ersten Verfahrensschritt das Vergleichsgas mit der aktuellen Grundkonzentration gleichzeitig die Meßküvette (2) und die Vergleichsküvette (3) durchströmt und der Nullpunkt des Infrarot-Gasanalysators elektrisch abgeglichen wird,

g) in einem zweiten Verfahrensschritt eine Kalibrierküvette (4) in den Strahlengang jeder nach dem ersten Verfahrensschritt befüllten Küvette (2,3) geschoben wird, die mit der Meßkomponente einer vorgegebenen Konzentration gefüllt ist, die dem gewünschten Meßbereich entspricht,

h) die Empfindlichkeit des Detektors (18) für das elektrische Signal so abgeglichen wird, daß dieser Meßbereich der Meßspanne entspricht und

i) nach Abschluß der Abgleichschritte die Vergleichskammer (3) mit dem Vergleichsgas und die Meßkammer (2) mit dem Meßgas beschickt werden und die Kalibrierküvette (4) aus dem Strahlengang herausgezogen wird.

2. Abgleichverfahren nach Anspruch 1, insbesondere für die Assimilationsmessung, dadurch gekennzeichnet, daß Luft als Vergleichsgas dient und daß ein Teil der Luft gleicher Gaskonzentration für den Assimilationsvorgang verwendet wird und das mit den zu bestimmenden Gasanteilen der Assimilation angereicherte Meßgas liefert.